# EUROPÄISCHE PATENTANMELDUNG

(11) **EP 3 660 384 A1**
(43) Veröffentlichungstag der Anmeldung: **03.06.2020**
(21) Anmeldenummer: 19212745.4
(22) Anmeldetag: 29.11.2019
(51) Int. Cl.: F21K 9/64

(54) **LEUCHTE**

(30) Priorität: 30.11.2018 DE 102018130543
(71) Anmelder: Erwin Hymer Group SE, 88339 Bad Waldsee (DE)
(72) Erfinder: Metzler, Marcus, 88339 Bad Waldsee (DE); Buck, Rainer, 88239 Wangen i. Allgäu (DE); Dorn, Günter, 88282 Schlier (DE)
(74) Vertreter: Waller, Stefan

(57) **Zusammenfassung**

Leuchte zur Abgabe von Licht und/oder Lichtsignalen, wobei die Leuchte einen Träger, mindestens eine Lackschicht oder mindestens ein Lacksystem sowie mindestens zwei elektrische Kontaktstellen umfasst, wobei die Lackschicht oder das Lacksystem zwischen dem Träger und mindestens einem optischen Element zur Lichtleitung oder Lichtbrechung angeordnet ist.

## Beschreibung

Die Erfindung betrifft eine Leuchte bzw. eine Beleuchtungseinheit. Derartige Leuchten bzw. Beleuchtungseinheiten finden eine Vielzahl von Einsatzzwecken, beispielsweise im Bereich des Fahrzeugbaus, der Ambientebeleuchtung, der Haustechnik, aber auch im Möbeldesign, der Werbetechnik oder sonstigen Dekorationsanwendungen.

### Stand der Technik:

Aus dem Stand der Technik sind klassische Leuchten bekannt, bei welchen ein Leuchtmittel hinter einem optischen Element, beispielsweise einer Streuscheibe, ein Lichtsignal oder eine Lichtwirkung erzeugt. Exemplarisch sind hierbei z.B. Verkehrsampeln zu nennen.

Des Weiteren sind aus dem Stand der Technik Lacksysteme bekannt, welche unter der Einwirkung von elektrischem Strom zu lichtemittierenden Effekten, sogenannter Elektrolumineszenz, angeregt werden können. Exemplarisch sei hier das Lacksystem Lumilor der Andre Koch AG (CH) erwähnt.

Nachteilig an den Systemen des Standes der Technik ist entweder die erheblich eingeschränkte Leuchtleistung oder der erforderliche erhöhte Bauraum, welche in der Regel ein Gehäuse sowie Gehäusedurchbrüche bedingt.

### Aufgabe und Vorteile der Erfindung:

Aufgabe der vorliegenden Erfindung ist es, den Stand der Technik dahingehend zu verbessern, dass flexiblere Anordnungen von ausreichend wahrnehmbaren Leuchten ermöglicht werden. Darüber hinaus sind Aufwandsersparnis bei Kosten und Produktion im Fokus der Erfindung. Zusätzlich können Werkzeuge, Werkzeugkosten, Dichtungen usw. eingespart bzw. reduziert werden. Auch ein hoher Verschleiß an konventionellen Leuchtmitteln wird vermieden.

Die Erfindung betrifft eine Leuchte zur Abgabe von Licht und/oder Lichtsignalen, wobei die Leuchte einen Träger, mindestens eine Lackschicht oder mindestens ein Lacksystem sowie mindestens 2 elektrische Kontaktstellen umfasst. Dabei ist vorgesehen, dass die Lackschicht oder das Lacksystem zwischen dem Träger und mindestens einem optischen Element zur Lichtleitung oder Lichtbrechung angeordnet ist.

Lacksysteme, welche Licht emittierende Effekte umfassen, weisen in der Regel nicht die notwendige Leuchtkraft z.B. zur Wahrnehmung als Signal auf. Durch den Einsatz mindestens eines optischen Elementes, welches z.B. in der Lage ist, flächige Leuchterscheinungen zu bündeln, kann die Wahrnehmung erheblich verstärkt werden, sodass die Leuchte für entsprechende Einsatzzwecke zur Verfügung steht. Besonders vorteilhaft ist dabei, dass die Lackschicht bzw. das Lacksystem flächig auf den Träger aufgebracht wird, und keine durch Brechungen und/oder Gehäuseelemente vorzusehen sind.

In einer bevorzugten Ausführungsform ist vorgesehen, dass der Träger als Trägerelement, vorzugsweise als Trägerfläche, insbesondere Bestandteil eines Gehäuses oder einer Karosserie ausgebildet ist.

Durch den Einsatz eines Gehäusebestandteils oder einer Karosserie im Sinne des Trägers bzw. Trägerelements ist es möglich, Produktionsprozesse zu vereinfachen und kostengünstiger zu gestalten, da beispielsweise Ausschnitte entfallen oder gesamte Baugruppen nicht vorgesehen werden müssen.

Des Weiteren ist bevorzug vorgesehen, dass das Lacksystem als mehrschichtiges System ausgebildet ist, wobei vorzugsweise mindestens eine Schicht elektrische Leitfähigkeit aufweist sowie mindestens eine weitere Schicht elektrische Isolationsfähigkeit aufweist.

Durch den Aufbau eines mehrschichtigen Lacksystems sind unterschiedliche Effekte erzielbar, beispielsweise in dem Farben überlagert werden oder physikalische Eigenschaften, wie z.B. Dämmung der Intensität oder Kühlung des Systems durch unterschiedliche Schichten realisiert werden können.

Eine Ausführungsform sieht weiterhin vor, dass die Lackschicht oder das Lacksystem eine zweidimensionale Strukturierung, insbesondere Unterbrechungen in Form von Linien oder Punkten aufweist.

Der Aufbau der Lackschicht bzw. des Lacksystems als zweidimensionale Struktur gibt Möglichkeiten, Geometrie in die Lichtsymbolik einzubinden, Flächeneffekte wie z.B. Bewegungen in Form von Lauflichtern zu realisieren bis hin zur Möglichkeit, Grafiken in Form von Pixeldarstellungen vorzusehen. Auch die Anordnung mehrerer unterschiedlich farbiger Pixel in engster Nachbarschaft ist denkbar.

Bevorzugt ist überdies vorgesehen, dass eine Mehrzahl von elektrischen Kontaktstellen vorgesehen ist, wobei die Kontaktstellen insbesondere in einer zweidimensionalen Strukturierung, bevorzugt in Form von Linien oder Punkten angeordnet sind.

Entsprechend dem voranbeschriebenen Ausführungsbeispiel sind für die Ansteuerung von zweidimensionalen Lackstrukturen entsprechende elektrische Kontaktstellen vorzusehen, wobei je nach elektrotechnischer Ausgestaltung z.B. auch eine gemeinsame Kontaktstelle, insbesondere in Form des Trägers z.B. als Massepol, ausgebildet sein kann.

Eine Ausführungsform sieht vor, dass das optische Element als Streuscheibe oder als Prismenkörper oder als Linse, insbesondere als Fresnellinse ausgebildet ist.

Das optische Element bietet Zugang zu den unterschiedlichen zu verstärkenden Effekten der Leuchte, da je nach vorgesehenem Anwendungsfall eine Wahrnehmung aus der Ferne gegebenenfalls eine Fokussierung bedingt, wohingegen eine Wahrnehmung aus der Nähe möglicherweise eine Streuung, beispielsweise durch ein Prismenglas oder dergleichen erforderlich macht.

Damit geht bevorzugt einher, dass die Lichtleitung oder Lichtbrechung einen fokussierenden oder einen defokussierenden und/oder einen abblendenden und/oder einen Licht-richtenden Effekt erzeugt.

Die Erfindung betrifft weiterhin eine Beleuchtungseinheit, dadurch gekennzeichnet, dass mindestens zwei, vorzugsweise mehrere oben beschriebene Leuchten umfasst sind, wobei mehrere optische Elemente zur Lichtleitung und/oder Lichtbrechung für die jeweiligen Leuchten zusammengefasst als einstückige Baugruppe ausgebildet sind.

Die Beleuchtungseinheit ermöglicht dabei die Anordnung mehrerer Leuchten, z.B. um unterschiedliche Signalisierung, Farben oder geometrische Darstellungen in einer Baugruppe bereitzustellen.

Besonders bevorzugt ist dabei, dass die Baugruppe mit einem Basiselement, welches vorzugsweise durch den/die Träger gebildet ist oder diese aufnimmt, stoffschlüssig verbunden, insbesondere verschweißt oder verklebt ist, bevorzugt eine gegenüber Umwelteinflüssen abgedichtete Einheit bildet.

Die Ausbildung einer in sich verkapselten Baugruppe erlaubt einen flexiblen industriellen Einsatz, da das komplette Element sehr flach aufbauen kann, keinen Durchbruch eines Gehäuses oder einer Karosserie bedingt bzw. derart abgedichtet sein kann, dass es unmittelbar und ohne zusätzlichen Aufwand den Umwelteinflüssen ausgesetzt werden kann.

Die Erfindung ist dabei nicht auf das nachfolgend beschriebene Ausführungsbeispiel beschränkt.

### Beschreibung eines Ausführungsbeispiels:

Eine Ausführungsform der Erfindung kann in einer Signaleinheit für ein Fahrzeug, insbesondere ein Kraftfahrzeug, ein Reisemobil, einen Wohnwagen oder anderweitige Fahrzeuge gesehen werden. Die Signaleinheit umfasst dabei z.B. einen Blinker, ein Bremslicht, eine Rückfahrlampe, eine Kennzeichenbeleuchtung oder andere notwendige Leuchten.

Gemäß der Erfindung wird unmittelbar auf die Karosserie des Fahrzeugs, oder auf ein darauf aufgebrachtes Trägermaterial eine lumineszierende Lackschicht bzw. ein Lacksystem aufgebracht, wobei zur elektrischen Kontaktierung ebenfalls flächige Leiterbahnen vorgesehen sind oder nur filigrane Durchbrechungen der Karosserie oder des Gehäuses erforderlich sind.

Um eine Baugruppe einer Signaleinheit zu komplettieren sind möglicherweise mehrere unterschiedliche Lackschichten auf- oder nebeneinander angeordnet, wobei die Lackschichten entsprechend ihrer Funktion hinter mehreren optischen Elementen angeordnet sind. Die optischen Elemente welche zu einer Baugruppe, beispielsweise einer Kunststoffabdeckung, zusammengefasst sind, erzeugen die unterschiedlichen Wahrnehmungseffekte, welche z.B. in Licht-Richtung und Licht-Intensität bei einem Blinker unterschiedlich zu einem Kennzeichenlicht oder einer Ambientebeleuchtung sein können.

Eine versiegelnde Verklebung dieser Kunststoffabdeckung mit dem Trägerelement erlaubt eine extrem flache und kostengünstige Baugruppe, welche im KFZ Bereich zu einer erhöhten Flexibilität bei geringeren Kosten führt.

## Patentansprüche

1. Leuchte zur Abgabe von Licht und/oder Lichtsignalen, wobei die Leuchte einen Träger, mindestens eine Lackschicht oder mindestens ein Lacksystem sowie mindestens zwei elektrische Kontaktstellen umfasst,
**dadurch gekennzeichnet,**
**dass** die Lackschicht oder das Lacksystem zwischen dem Träger und mindestens einem optischen Element zur Lichtleitung oder Lichtbrechung angeordnet ist.

2. Leuchte nach Anspruch 1,
**dadurch gekennzeichnet,**
**dass** der Träger als Trägerelement, vorzugsweise als Trägerfläche, insbesondere Bestandteil eines Gehäuses oder einer Karosserie ausgebildet ist.

3. Leuchte nach Anspruch 1 oder 2,
**dadurch gekennzeichnet,**
**dass** das Lacksystem als mehrschichtiges System ausgebildet ist, wobei vorzugsweise mindestens eine Schicht elektrische Leitfähigkeit aufweist sowie mindestens eine weitere Schicht elektrische Isolationsfähigkeit aufweist.

4. Leuchte nach einem der vorangegangenen Ansprüche,
**dadurch gekennzeichnet,**
**dass** die Lackschicht oder das Lacksystem eine zweidimensionale Strukturierung, insbesondere Unterbrechungen in Form von Linien oder Punkten aufweist.

5. Leuchte nach einem der vorangegangenen Ansprüche,
**dadurch gekennzeichnet,**
**dass** eine Mehrzahl von elektrischen Kontaktstellen vorgesehen ist, wobei die Kontaktstellen insbesondere in einer zweidimensionalen Strukturierung, bevorzugt in Form von Linien oder Punkten angeordnet sind.

6. Leuchte nach einem der vorangegangenen Ansprüche,
**dadurch gekennzeichnet,**
**dass** das optische Element als Streuscheibe oder als Prismenkörper oder als Linse, insbesondere als Fresnellinse ausgebildet ist.

7. Leuchte nach einem der vorangegangenen Ansprüche,
**dadurch gekennzeichnet,**
**dass** die Lichtleitung oder Lichtbrechung einen fokussierenden oder einen defokussierenden und/oder einen ab blendenden und/oder einen Licht-richtenden Effekt erzeugt.

8. Beleuchtungseinheit,
**dadurch gekennzeichnet,**
**dass** mindestens zwei, vorzugsweise mehrere Leuchten nach einem der vorgenannten Ansprüche umfasst sind, wobei mehrere optische Elemente zur Lichtleitung und/oder Lichtbrechung für die jeweiligen Leuchten zusammengefasst als einstückige Baugruppe ausgebildet sind.

9. Beleuchtungseinheit nach Anspruch 8
**dadurch gekennzeichnet,**
**dass** die Baugruppe mit einem Basiselement, welches vorzugsweise durch den/die Träger gebildet ist oder diese aufnimmt, stoffschlüssig verbunden, insbesondere verschweißt oder verklebt ist, bevorzugt eine gegenüber Umwelteinflüssen abgedichtete Einheit bildet.
